# EUROPEAN PATENT SPECIFICATION

(11) **EP 2 158 265 B1**
(45) Date of publication and mention of the grant of the patent: **04.05.2011**
(21) Application number: 08730950.6
(22) Date of filing: 28.02.2008
(51) Int. Cl.: C08L 31/02, C08L 31/04

(54) **COPOLYMER MIXTURE**
COPOLYMERMISCHUNG
MÉLANGE DE COPOLYMÈRES

(30) Priority: 15.05.2007 US 930331 P
(43) Date of publication of application: 03.03.2010
(73) Proprietor: Dow Global Technologies LLC, Midland, MI 48674 (US)
(72) Inventor: PERELLO, Margarita, 8600 Dübendorf (CH); KUEHN, Hartmut, 06116 Halle (DE); DOMBROWSKI, Juergen, 06122 Halle (DE); WICHMANN, Andreas, 06258 Schkopau (DE)
(74) Representative: Fleischer, Holm Herbert
(86) International application number: PCT/US2008/055275
(87) International publication number: WO 2008/140852

(56) References cited:
- EP-A- 0 931 825
- EP-A- 0 960 908
- DE-C1- 19 729 056
- JP-A- 4 145 182

## Description

The present invention relates to a redispersible polymer powder comprising a polymer composition comprising a mixture of a vinyl ester copolymer and a vinyl acetat`e/ethylene copolymer; a composition comprising an inorganic hydraulic binding agent and said polymer composition; and uses of said polymer composition, especially in tile adhesives.

Polymer dispersions or redispersible polymer powders have been employed for many years, in particular in the building sector, for modifying hydraulic systems, paints and adhesives. Essential improvements in the properties such as adhesion, abrasion resistance, scratch resistance and flexural strength are achieved by the addition of said polymers to such systems. The aqueous polymer dispersions, also known as polymer latices, are typically prepared by emulsion polymerization and the redispersible polymer powders are made by straight drying such aqueous polymer dispersions. The great advantage of dispersion powders over aqueous polymer dispersions is inter alia a high storage stability without addition of preservatives and the frost resistance of the pulverulent dry mixtures.

US-B-6,242,512 describes a redispersible polymer powder based on a mixture of a water-insoluble base polymer and a water-soluble protective colloid. The water-insoluble base polymer is selected from the group consisting of homo- and copolymers of vinyl esters, acrylic acid esters, methacrylic acid esters, styrene and vinyl chloride, and mixtures thereof.

US-A-2004/0097645 discloses a protective colloid-stabilized base polymer in the form of an aqueous dispersion or of its water-redispersible powder comprising homo- or copolymers of one or more monomers selected from vinyl esters of optionally branched alkyl carboxylic acids, (meth)acrylic esters of alcohols, vinyl aromatics, olefins, dienes, and vinyl halides, wherein partially hydrolyzed vinyl acetate/ethylene copolymers having a degree of hydrolysis of the vinyl acetate units of between 80 and 95 mol % are present as protective colloids.

One major application for redispersible polymer powders is in tile adhesives. The redispersible polymer powders improve various properties of cement-based tile adhesives such as workability (easier mixing and application, better wetting, reduced water demand), working time, adhesion (improved tensile and shear strength), aging properties, and flexibility. Redispersible polymer powders for conventional tile adhesives are typically vinyl acetate/ethylene copolymers.

One key performance of tile adhesives is the adhesion strength of the tiles to the substrate, also after water immersion and after exposure to higher temperature. It has been shown that the adhesion strength of tile adhesives modified with conventional redispersible polymer powders is sometimes insufficient, especially after water immersion or exposure to higher temperatures.

It is thus the object to provide a new polymer composition that may be used as an additive in hydraulically setting compositions, primarily tile adhesives, and improves the overall adhesive strength of the set compositions, especially water resistance and/or heat resistance.

The object is met by a polymer composition comprising (a) a copolymer comprising in polymerized form at least one vinyl ester (i) of a monocarboxylic acid having 2 to 4 carbon atoms and at least one vinyl ester (ii) of a monocarboxylic acid having at least 5 carbon atoms and (b) a copolymer different from copolymer (a) and comprising in polymerized form vinyl acetate and ethylene.

The present invention relates to a redispersible polymer powder and an aqueous dispersion comprising said polymer composition.

A further aspect is a composition comprising an inorganic hydraulic binding agent and said polymer composition.

Moreover, the present invention is concerned with the use of said polymer composition in tile adhesives, construction adhesives, joint mortars, plasters, troweling compositions, floor-filling compositions, or paints.

Another aspect of the present invention is the use of said polymer composition as binder in coating compositions or adhesives in the absence of any inorganic hydraulic binding agent.

Still another aspect the present invention is the use of said polymer composition for coating or binding of wood, paper or textiles.

It was found by the present inventors that a polymer composition comprising copolymers (a) and (b) as defined above which is used as an additive in a setting composition surprisingly improves the adhesive properties of the set composition.

Copolymer (a) of the present polymer composition comprises in polymerized form (i) at least one vinyl ester of a monocarboxylic acid having 2 to 4 carbon atoms and (ii) at least one vinyl ester of a monocarboxylic acid having at least 5 carbon atoms and (iii) optional comonomers. Typically, copolymer (a) comprises 0 to 30 % by weight of optional comonomers (iii). Preferably copolymer (a) comprises in polymerized form (i) 20 to 95 % by weight, more preferably 40 to 85 % by weight and most preferably 50 to 75 % by weight of one or more vinyl esters of a monocarboxylic acid having 2 to 4 carbon atoms; (ii) 5 to 80 % by weight, more preferably 15 to 60 % by weight, and most preferably 25 to 50 % by weight of one or more vinyl esters of a monocarboxylic acid having at least 5 carbon atoms; and (iii) 0 to 30 % by weight, more preferably 0 to 25 % by weight, and most preferably 0 % by weight of one or more optional comonomers. Typically, copolymer (a) comprises in polymerized form (i) one type of a vinyl ester of a monocarboxylic acid having 2 to 4 carbon atoms, (ii) one type of a vinyl ester of a monocarboxylic acid having at least 5 carbon atoms and either no optional comonomers or one type of an optional comonomer.

The vinyl esters (i) of a monocarboxylic acid having 2 to 4 carbon atoms being copolymerized to form copolymer (a) include the vinyl esters of acetic acid, propionic acid, butyric acid and isobutyric acid, the preferred vinyl ester (i) of a monocarboxylic acid having 2 to 4 carbon atoms is the vinyl ester of acetic acid, i.e. vinyl acetate.

The vinyl esters (ii) of a monocarboxylic acid having at least 5 carbon atoms being copolymerized to form copolymer (a) include straight-chain monocarboxylic acids, e.g. lauric arid, and branched-chain monocarboxylic acid. Preferably, the monocarboxylic acid is a branched-chain, more preferably an α-branched monocarboxylic acid such as 2-ethylhexanoic acid or a monocarboxylic acid comprising a tertiary carboxy group. Most preferred vinyl esters (ii) of copolymer (a) are the vinyl esters of a monocarboxylic acid comprising a tertiary carboxy group. With respect to the number of carbon atoms the monocarboxylic acid, either branched-chain or straight-chain, preferably has 5 to 15, more preferably 5 to 13. even more preferably 5 to 10, still more preferably 8 to 10, and most preferably 10 carbon atoms.

In one preferred embodiment the vinyl ester (ii) of a monocarboxylic acid having at least 5 carbon atoms being copolymerized to form copolymer (a) is a vinyl ester of versatic acid, preferably having 5 to 10 carbon atoms. Typically the vinyl ester of versatic acid is represented by formula (I) 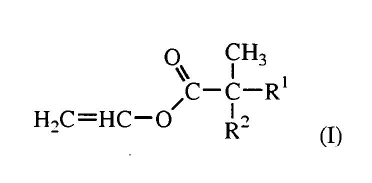 wherein R¹ and R² independently represent an alkyl group having at least one carbon atom. Examples of versatic acid include versatic acid 5 (pivalic acid), versatic acid 6, versatic acid 7, versatic acid 8, versatic acid 9, and versatic acid 10. Preferably vinyl ester (ii) is a vinyl ester of versatic acid 10 being represented by formula (I) wherein R¹ and R² are independently selected in order to provide a monocarboxylic acid unit having 10 carbon atoms. In one embodiment R¹ is methyl and R² is hexyl. The vinyl ester of versatic acid 10 is commercially available from Hexion Speciality Chemicals, The Netherlands, under the trademark VEOVA® 10.

The comonomers (iii) that may optionally be copolymerized to form copolymer (a) include but are not limited to esters of acrylic acid such as methylacrylate, ethylacrylate, butylacrylate, and 2-ethylhexylacrylate; esters of maleic acid such as such as diethyl ester, isopropyl ester, and 2-ethylhexylester; and ethylene. In one embodiment copolymer (a) does not comprise polymerized ethylene.

In a preferred embodiment copolymer (a) has a glass transition temperature of from + 5 to + 40°C, more preferably from +10 to + 30°C, measured according to Differential Scanning Calorimetry (DSC).

Copolymer (b) of the present polymer composition comprises in polymerized form vinyl acetate and ethylene and optional comonomers. Typically, copolymer (b) comprises 0 to 25 % by weight of optional comonomers. Preferably copolymer (b) comprises in polymerized form 70 to 95 % by weight, more preferably 80 to 90 % by weight, and most preferably 83 to 87 % by weight of vinyl acetate; 5 to 30 % by weight, more preferably 10 to 20 % by weight, and most preferably 13 to 17 % by weight of ethylene; and 0 to 25 % by weight, more preferably 0 to 20 % by weight and most preferably 0 % by weight of one or more optional comonomers.

The comonomers that may optionally be copolymerized to form copolymer (b) include but are not limited to esters of acrylic acid such as methylacrylate, ethylacrylate, butylacrylate, and 2-ethylhexylacrylate; esters of maleic acid such as diethyl ester, isopropyl ester, and 2-ethylhexylester; and vinyl esters of versatic acid as described above. In a most preferred embodiment copolymer (b) is a vinyl acetate/ethylene copolymer without any further comonomers.

It is understood that the term "vinyl acetate" as used herein means vinyl acetate units that are essentially unhydrolysed, i.e. their degree of hydrolysis is normally less than 10 mol % and typically less than 5 mol %. However, under very basic conditions, e.g. in strongly basic aqueous dispersions having a pH of 12 or more, hydrolysis may take place, but usually the degree of hydrolysis is still less than 70 mol %. Generally, the vinyl acetate units of both copolymer (a) and copolymer (b) have a degree of hydrolysis of less than 80 mol%.

In a preferred embodiment copolymer (b) has a glass transition temperature of from - 10 to + 35°C, more preferably from + 5 to + 30°C, measured according to Differential Scanning Calorimetry (DSC).

Copolymers (a) and (b) for use in the present invention can be prepared as is well known to the person skilled in the art. Typically, they are prepared by emulsion polymerization and are thus obtained in the form of aqueous polymer dispersions also known as polymer latices.

The emulsion polymerization process by which copolymers (a) and (b) may be prepared is generally conducted at a polymerization temperature from 40 to 90°C, preferably from 60 to 80°C. In the case of the copolymerization of gaseous comonomers such as ethylene the process may also be carried out at superatmospheric pressure, generally at from 5 to 100 bar.

The polymerization is initiated using water-soluble or monomer-soluble initiators or redox-initiator combinations, these being those commonly used for emulsion polymerization. Examples of water-soluble initiators are the sodium, potassium, and ammonium salts of peroxydisulfuric acid, hydrogen peroxide, tert-butyl peroxide, tert-butyl hydroperoxide, potassium peroxydiphosphate, tert-butyl peroxypivalate, cumene hydroperoxide, isopropylbenzene monohydroperoxide, and azobisisobutyronitrile. Examples of monomer-soluble initiators are dicetyl peroxydicarbonate, dicyclohexyl peroxydicarbonate, and dibenzoyl peroxide. The amount of the initiators generally used is from 0.01 to 0.5% by weight, based on the total weight of the monomers.

Redox initiators include combinations of the initiators previously mentioned with reducing agents. Suitable reducing agents are the sulfites and bisulfites of the alkali metals and of ammonium, for example sodium sulfite, the derivatives of sulfoxylic acid, for example zinc formaldehyde sulfoxylates or alkali metal formaldehyde sulfoxylates, an example being sodium hydroxymethanesulfinate, and ascorbic acid. The amount of reducing agent is preferably from 0.01 to 0.5 % by weight, based on the total weight of the monomers.

To control molecular weight, regulating substances may be used during the polymerization process. If regulators are used, the amounts usually used of these are generally from 0.01 to 5.0 % by weight, based on the weight of the monomers to be polymerized, and they may be fed separately and/or after premixing with components for the reaction. Examples of these substances are n-dodecyl mercaptan, tert-dodecyl mercaptan, mercaptopropionic acid, methyl mercaptopropionate, isopropanol, and acetaldehyde. It is preferable not to use any regulating substances.

The polymerization process preferably takes place without addition of emulsifiers. In exceptional cases, it can also be advantageous to make additional use of small amounts of emulsifiers, where appropriate from 1 to 5 % by weight, based on the amount of monomer. Suitable emulsifiers include anionic, cationic, and non-ionic emulsifiers, for example anionic surfactants such as alkyl sulfates whose chain length is from 8 to 18 carbon atoms, or alkyl or alkyl aryl ether sulfates having from 8 to 18 carbon atoms in the hydrophobic radical and up to 40 ethylene or propylene oxide units, alkyl- or alkylarylsulfonates having from 8 to 18 carbon atoms, esters and half esters of sulfosuccinic acid with monohydric alcohols or with alkylphenols, or non-ionic surfactants such as alkyl polyglycol ethers or alkylaryl polyglycol ethers having from 8 to 40 ethylene oxide units. All of the monomers may form an initial charge, or all of the monomers may form a feed, or portions of the monomers may form an initial charge and the remainder may form a feed after the polymerization has been initiated. The procedure is preferably that from 50 to 100 % by weight, based on the total weight of the monomers, form an initial charge and the remainder forms a feed. The feeds may be separate (spatially and chronologically), or all or some of the components to be fed may be fed after preemulsification.

Once the polymerization process has ended, post-polymerization may be carried out using known methods to remove residual monomer, one example of a suitable method being post-polymerization initiated by a redox catalyst. Volatile residual monomers may also be removed by distillation, preferably at subatmospheric pressure, and, where appropriate, by passing inert entraining gases, such as air, nitrogen, or water vapor, through or over the material.

The aqueous polymer dispersions (polymer latices) obtained from emulsion polymerization may be dried, typically by using a spray drying process, in order to obtain redispersible polymer powders.

The polymer composition is prepared by mixing copolymer (a) and copolymer (b). It is not critical for the present invention how and when copolymers (a) and (b) are mixed. For example copolymers (a) and (b) may be mixed as their aqueous dispersions directly obtained from the emulsion polymerization or copolymers (a) and (b) may be dry blended by mixing their redispersible polymer powders or copolymers (a) and (b) may be mixed in the form of their aqueous dispersions obtained by redispersing the redispersible powders. The most suitable mixing method may be readily selected by the person skilled in the art depending, for example, on the intended end use of the polymer composition. The mixing procedure can be carried out by using conventional mixing equipment.

Typically, the polymer composition comprises copolymer (a) and copolymer (b) in a weight ratio of from 10:90 to 90:10, preferably from 20:80 to 80:20, more preferably from 40:60 to 60:40, and most preferably about 50 to 50.

The polymer composition may comprise additional components, such as organic solvents, plasticizers, film forming agents, additional polymers as well as impurities resulting from the polymerization processes, e.g. unreacted monomers, residual initiators, biocides and defoaming agents. Typically, the combined weight of copolymer (a) and copolymer (b) constitutes at least 50 % by weight, preferably at least 70 % by weight, more preferably at least 75 % by weight, and most preferably at least 85 % by weight of the dry weight of the polymer composition. In a preferred embodiment the polymer composition comprises less than 25 by weight, more preferably less than 20 % by weight, and most preferably less than 15 % by weight of additional components. The present invention is directed to a redispersible polymer powder and an aqueous dispersion comprising the polymer composition as described above. The redispersible polymer powder is obtained by drying aqueous dispersions of copolymers (a) and (b), either prior to or after mixing copolymers (a) and (b). The aqueous dispersion according to the present invention encompasses both an aqueous dispersion comprising copolymers (a) and (b) before drying and after redispersion of the polymer powders.

The redispersible polymer powders are prepared from aqueous dispersions of the copolymers. The solids content of said aqueous dispersions is generally from 30 to 75 % by weight. To prepare the redispersible polymer powders the aqueous dispersions are dried, for example by spray drying, freeze drying or fluidized-bed drying. Preferably the aqueous dispersions are spray dried. Spray drying is typically performed after addition of one or more protective colloids as a spraying aid to the dispersion, preferably in the form of an aqueous solution. Addition can proceed in any manner as long as a homogenous dispersion mixture is obtained. Further additives such as surfactants and defoamers may be employed, if desired, and said further additives are preferably added to the aqueous dispersion before drying. The total amount of protective colloid(s) used is generally from 2 to 30 % by weight, based on the polymeric components of the dispersion. Examples of protective colloids include but are not limited to polyvinyl alcohol, water-soluble polysaccharides, cellulose derivatives, proteins such as caseinate, lignosulfonate and several water-soluble polymers. Preferred protective colloids are polyvinyl alcohols with a degree of hydrolysis of 80 to 95 mole % and a Hoeppler viscosity of 1 to 30 mPa·s, measured as a 4 weight % aqueous solution at 20°C according to DIN 53015. The polyvinyl alcohols are optionally hydrophobically modified. The amount of the polyvinyl alcohols is preferably from 2 to 20 % by weight, more preferably from 5 to 15 % by weight, based on the total weight of polymeric constituents.

The spray drying can take place in conventional spray drying systems, for example a dispersion may be atomized by using single, twin or multifluid nozzles or a rotating disk in a stream of drying gas which may be heated. In general, air, nitrogen or nitrogen enriched air is employed as the drying gas, the drying gas temperature typically not exceeding 250°C. The drying temperature preferably is from 120 to 180°C, more preferably from 150 to 170°C. The product outlet temperature preferably is from 30 to 80°C

An anticaking agent (antiblocking agent) may be added to the polymer powder to increase storage stability, for example in order to prevent caking and blocking and/or to improve the flow properties of the powder. This addition is preferably carried out as long as the powder is still finely dispersed, for example still suspended in the drying gas. The anticaking agent is preferably of mineral origin. It is preferably added in an amount of up to 30 % by weight, based on the total weight of polymeric constituents. Examples of anticaking agents include but are not limited to kaolin, calcium carbonate, magnesium carbonate, talc, gypsum, silica and silicates, the particle sizes of the anticaking agents are preferably in the range of from 10 nm to 10 µm. A preferred anticaking agent is kaolin.

In a preferred embodiment of the present invention the redispersible polymer powder further comprises a protective colloid or an anticaking agent, more preferably it comprises both. It is understood that more than one protective colloid and more than one anticaking agent may be used.

The major use of the polymer composition is as an additive in a setting composition further comprising an inorganic hydraulic binding agent. Cured (set) compositions comprising the polymer composition and an inorganic hydraulic binding agent show improved adhesion properties compared to similar compositions of the prior art. In particular, the use of the present polymer compositions in setting composition, e.g. tile adhesives, result in an improvement of at least on of the following properties: adhesion strength after immersion in water (water resistance), adhesion strength after exposure to higher temperatures (heat resistance), and adhesion strength after allowing a certain "open time" before final application of the hydrated setting composition.

As most of the setting compositions are pulverulent and water is only added by the end user, the polymer composition according to the present invention is typically comprised in the composition in the form of a redispersible polymer powder.

Illustrative uses of the polymer composition are in tile adhesives, construction adhesives, joint mortars, plasters, troweling compositions, floor filling compositions (e.g. self-leveling flooring compounds). Examples of hydraulic binding agents include cements, such as Portland cement, alumina cement, pozzolanic cement, slag cement, magnesia cement and phosphate cement; gypsum hemihydrate and water-glass.

The polymer composition may also be used as binder, preferably as the sole binder, in coating compositions and adhesives in the absence of any inorganic hydraulic binding agent. For example, the polymer composition may be used as binding agent for textiles, papers, and wood, typically in the absence of a substantial amount of an inorganic hydraulic binding agent.

The preferred use of the polymer composition is in tile adhesives, more preferred cement-based tile adhesives. Cement-based tile adhesives typically comprise 5 to 50 parts by weight of cement, preferably Portland cement, as the hydraulic binder; 40 to 70 parts by weight of quartz sand, preferably having a particle size of from 0.1 to 0.5 mm, as the main filler and 0.1 to 10 % by weight, preferably 1 to 6 % by weight (based on the dry weight of the tile adhesive) of the redispersible polymer powder according to the present invention. Further optional components include one or more cellulose ethers (preferably in a total amount of 0.05 to 1 % by weight, more preferably 0.2 to 0.5 % by weight, based on the dry weight of the tile adhesive) to control rheology, water retention, slip resistance and improved workability; quartz or lime stone powder having a particle size of from 30 to 60 µm as fine co-filler to improve consistency and workability; and cellulose or mineral fibers to improve the slip resistance.

### EXAMPLES

All percentages and parts given in the examples are based on weight unless otherwise indicated.

Copolymer E1 is redispersible polymer powder of a vinyl acetate/ethylene copolymer comprising 82.6 % of vinyl acetate units and 17.4 % of ethylene units. It has a minimum film forming temperature of about 0°C and a glass transition temperature of about 6°C.

Copolymer E2 is a redispersible polymer powder of a vinyl acetate/ethylene copolymer comprising 90.5 % of vinyl acetate units and 9.5 % of ethylene units. It has a minimum film forming temperature of about 3°C and a glass transition temperature of about 17°C.

Copolymer V1 is a redispersible polymer powder of a copolymer of vinyl acetate and the vinyl ester of versatic acid 10 comprising 60 % of vinyl acetate units and 40 % of units derived from the vinyl ester of versatic acid 10. It has a minimum film forming temperature of about 2.5°C and a glass transition temperature of about 17°C.

Copolymer V2 is a redispersible powder of a copolymer of vinyl acetate and the vinyl ester of versatic a cid 10 comprising 90 % of vinyl acetate units and 10 % of units derived from vinyl ester of versatic a cid 10. It has a minimum film forming temperature of about 5°C and a glass transition temperature of about 30°C.

The redispersible polymer powders E1, E2, V1 and V2 are obtained from their corresponding aqueous polymer dispersions. Four aqueous polymer dispersions comprising copolymers E1, E2, V1 and V2 respectively according to the description before are prepared by a conventional emulsion polymerization process as generally described before. Each of the four aqueous polymer dispersions is processed to a redispersible powder as described hereafter. After removal of residual monomers from the polymer dispersion, an aqueous solution of polyvinyl alcohol in water is added to each of the aqueous polymer dispersions, such that the amount of the polyvinyl alcohol is 10 % by weight, based on the polymer weight. The polyvinyl alcohol has a degree of hydrolysis of 88 mole % and a Hoeppler viscosity of 4 mPa·s, measured as a 4 weight % aqueous solution at 20°C according to DIN 53015. The blend of polymer dispersion and polyvinyl alcohol is then spray-dried. The drying temperature is 160°C. The product outlet temperature is 65°C. 12 % by weight kaolin are added during the drying process, based on the weight of the polymer.

Four different cement-based tile adhesive compositions are prepared by dry blending the solid components indicated in the Table and then adding water. Various properties of the tile adhesives being essential for their performance are tested and the results are also shown in the Table.

### Test methods

Initial strength, strength after water immersion and strength after heat aging are measured according to European standard EN 1348. The tile adhesive is applied onto concrete slabs and non absorbent ceramic tiles (Winckelmann, 50 to 50 mm) are sticked onto the tile adhesive to measure the pull of strength after being stored under different conditions: initial strength (28 d), strength after water immersion (7 d standard climate + 21 days water immersion) and strength after heat storage (14 d standard climate + 14 days at 70°C).

Strength after 20 min open time is measured according to EN 1346. The tile adhesive is applied onto a concrete slab and after a certain "open time" of 20 min ceramic absorbent tiles are sticked onto the tile adhesive to measure the strength after being stored for 28 d.

Sliding: The sliding resistance is a very important property of a tile adhesive to be used on vertical walls. It is measured by sticking a non absorbent ceramic tile 10 by 10 cm having a weight of 200 g onto the tile adhesive that has been applied onto a concrete slab. Then it is loaded for 30 s with 5 kg. Thereafter, the slab is brought in a vertical position and the way the tile slips down after 10 min is measured.

Rib deformation: The sliding test is performed as described above. When the test is finished and the sliding has been measured, the tile is pulled off by hand (as straight as possible). The percentage of the tile covered with material from the test is then judged by eye and noted.

Viscosity: The viscosities are obtained with a Brookfield viscometer in combination with a Brookfield Helipath stand. After a maturing time of 13 min the tile adhesive is filled into a cup and the spindle (F-T) of the viscometer rotates for 2 minutes with 0.5 rpm, for another 2 minutes with 5 rpm and another 2 minutes with 50 rpm. During the 5 rpm and 50 rpm rotation the viscometer is moved up and down so that its rotating spindle describes a helical path through the sample. The dynamic viscosities at 0.5 rpm, 5 rpm and 50 rpm are given in the Table.

Workability: Workability is evaluated subjectively and rated on a scale from 1 (very poor) to 5 (very good).

**TABLE: Compositions and properties of cement-based tile adhesives**

| | | EX. 1 | EX. 2 | EX. 3 | EX. 4* |
|---|---|---|---|---|---|
| COMPOSITION | | | | | |
| Cement¹ | parts | 40.00 | 40.00 | 40.00 | 40.00 |
| Quartz sand² | parts | 60.00 | 60.00 | 60.00 | 60.00 |
| Cellulose ether³ | parts | 0.40 | 0.40 | 0.40 | 0.40 |
| Redispersible Powders | | | | | |
| Copolymer E1 | parts | | | | 3.0 |
| 1:1 Blend of copolymers E2/V1 | parts | 3.0 | | | |
| 1:1 Blend of copolymers E1/V2 | parts | | 3.0 | | |
| 1:1 Blend of copolymers E2/V2 | parts | | | 3.0 | |
| Total | parts | 103.4 | 103.4 | 103.4 | 103.4 |
| Water | parts | 22.0 | 22.0 | 22.0 | 23 .0⁴ |
| | | | | | |

| PROPERTIES | | | | | |
|---|---|---|---|---|---|
| Initial Strength | N/mm² | 1.43 | 1.52 | 1.53 | 1.30 |
| Strength after water immersion | N/mn² | 0.96 | 0.76 | 0.74 | 0.74 |
| Strength after heat aging | N/mm² | 1.53 | 1.56 | 1.64 | 1.37 |
| Strength after 20min open time | N/mm² | 0.89 | 1.25 | 1.11 | 0.68 |
| | | | | | |
| Sliding 200 g | Mm | 0.95 | 0.50 | 0.47 | 0.41 |
| rib deformation | % | 95 | 90 | 95 | 70 |
| Density | kg/l | 1.46 | 1.49 | 1.47 | 1.48 |
| Workability | Rating | 5 | 5 | 5 | 5 |
| | | | | | |
| Viscosity at 0.5 rpm | Pa·s | 3232 | 2993 | 3252 | 3753 |
| Viscosity at 5 rpm | Pa·s | 496 | 453 | 479 | 528 |
| Viscosity at 50 rpm | Pa·s | 79 | 71 | 75 | 96 |

| | | | | | |
|---|---|---|---|---|---|
| *Comparative example ¹Portland cement CEM I 42.5 ²Quartz sand 0.1 - 0.4 mm ³ Hydroxypropyl methyl cellulose (Methocel 10-0148, available from The Dow Chemical Company, Midland, USA) ⁴ The amount of water has been adapted in order to have similar consistencies allowing to obtain comparable values of the various tested properties. | | | | | |

It is evident from the Table that each of the cement-based tile adhesives according to the present invention (Examples 1, 2 and 3) show significantly improved heat resistance and strength after 20 min open time, either in combination with a considerable improvement in water resistance (Example 1) or in case of Examples 2 and 3, with water resistance properties that are similar to that of the comparative tile adhesive Example 4.

## Claims

1. A redispersible polymer powder comprising
a polymer composition comprising
(a) a copolymer comprising in polymerized form at least one vinyl ester (i) of a monocarboxylic acid having 2 to 4 carbon atoms and at least one vinyl ester (ii) of a monocarboxylic acid having at least 5 carbon atoms and
(b) a copolymer different from copolymer (a) and comprising in polymerized form vinyl acetate and ethylene.

2. The redispersible polymer powder according to claim 1 wherein copolymer (a) comprises in polymerized form 20 to 95 % by weight of one or more vinyl esters (i) of a monocarboxylic acid having 2 to 4 carbon atoms, 5 to 80 % by weight of one or more vinyl esters (ii) of a monocarboxylic acid having at least 5 carbon atoms, and (iii) 0 to 30 % by weight of one or more optional comonomers.

3. The redispersible polymer powder according to any of the preceding claims wherein copolymer (b) comprises in polymerized form 70 to 95 % by weight of vinyl acetate, 5 to 30 % by weight of ethylene, and 0 to 25 % by weight of one or more optional comonomers.

4. The redispersible polymer powder according to any of the preceding claims wherein the weight ratio of copolymer (a) to copolymer (b) is from 10:90 to 90:10.

5. The redispersible polymer powder according to any of the preceding claims wherein the vinyl ester (i) of a monocarboxylic acid having 2 to 4 carbon atoms is vinyl acetate.

6. The redispersible polymer powder according to any of the preceding claims wherein the vinyl ester (ii) of a monocarboxylic acid having at least 5 carbon atoms is a vinyl ester of a monocarboxylic acid having 5 to 15 carbon atoms.

7. The redispersible polymer powder according to any of the preceding claims wherein the vinyl ester (ii) of a monocarboxylic acid having at least 5 carbon atoms is a vinyl ester of a branched-chain monocarboxylic acid.

8. The redispersible polymer powder according to claim 7 wherein the vinyl ester (ii) of a monocarboxylic acid having at least 5 carbon atoms is a vinyl ester of a monocarboxylic acid comprising a tertiary carboxy group.

9. The redispersible polymer powder according to any of the preceding claims further comprising a protective colloid and/or an anticaking agent.

10. An aqueous dispersion comprising the polymer composition set forth in any of claims 1 to 8.

11. A composition comprising an inorganic hydraulic binding agent and the polymer composition set forth in any of claims 1 to 8.

12. The composition according to claim 11 which is a cement-based tile adhesive.

13. Use of the polymer composition set forth in any of claims 1 to 8 in tile adhesives, construction adhesives, joint mortars, plasters, troweling compositions, floor-filling compositions, or paints.

14. Use of the polymer composition set forth in any of claims 1 to 8 as binder in coating compositions or adhesives in the absence of any inorganic hydraulic binding agent.

15. Use of the polymer composition set forth in any of claims 1 to 8 for coating or binding of wood, paper or textiles.

## Patentansprüche

1. Redispergierbares Polymerpulver, enthaltend eine Polymerzusammensetzung, die enthält:
(a) ein Copolymer, das in polymerisierter Form mindestens einen Vinylester (i) einer Monocarbonsäure mit 2 bis 4 Kohlenstoffatomen und mindestens einen Vinylester (ii) einer Monocarbonsäure mit mindestens 5 Kohlenstoffatomen enthält, und
(b) ein Copolymer, das sich von Copolymer (a) unterscheidet und in polymerisierter Form Vinylacetat und Ethylen enthält.

2. Redispergierbares Polymerpulver gemäß Anspruch 1, wobei Copolymer (a) in polymerisierter Form 20 bis 95 Gew.-% eines oder mehrerer Vinylester (i) einer Monocarbonsäure mit 2 bis 4 Kohlenstoffatomen, 5 bis 80 Gew.-% eines oder mehrerer Vinylester (ii) einer Monocarbonsäure mit mindestens 5 Kohlenstoffatomen und (iii) 0 bis 30 Gew.-% eines oder mehrerer optionaler Comonomere enthält.

3. Redispergierbares Polymerpulver gemäß einem der vorstehenden Ansprüche, wobei Copolymer (b) in polymerisierter Form 70 bis 95 Gew.-% Vinylacetat, 5 bis 30 Gew.-% Ethylen und 0 bis 25 Gew.-% eines oder mehrerer optionaler Comonomere enthält.

4. Redispergierbares Polymerpulver gemäß einem der vorstehenden Ansprüche, wobei das Gewichtsverhältnis von Copolymer (a) zu Copolymer (b) von 10:90 bis 90:10 reicht.

5. Redispergierbares Polymerpulver gemäß einem der vorstehenden Ansprüche, wobei der Vinylester (i) einer Monocarbonsäure mit 2 bis 4 Kohlenstoffatomen Vinylacetat ist.

6. Redispergierbares Polymerpulver gemäß einem der vorstehenden Ansprüche, wobei der Vinylester (ii) einer Monocarbonsäure mit mindestens 5 Kohlenstoffatomen ein Vinylester einer Monocarbonsäure mit 5 bis 15 Kohlenstoffatomen ist.

7. Redispergierbares Polymerpulver gemäß einem der vorstehenden Ansprüche, wobei der Vinylester (ii) einer Monocarbonsäure mit mindestens 5 Kohlenstoffatomen ein Vinylester einer verzweigtkettigen Monocarbonsäure ist.

8. Redispergierbares Polymerpulver gemäß Anspruch 7, wobei der Vinylester (ii) einer Monocarbonsäure mit mindestens 5 Kohlenstoffatomen ein Vinylester einer Monocarbonsäure, die eine tertiäre Carboxygruppe enthält, ist.

9. Redispergierbares Polymerpulver gemäß einem der vorstehenden Ansprüche, das ferner ein Schutzkolloid und/oder eine Rieselhilfe (Anticakingmittel) enthält.

10. Wässrige Dispersion, die die Polymerzusammensetzung wie in einem der Ansprüche 1 bis 8 dargestellt, enthält.

11. Zusammensetzung, die ein anorganisches hydraulisches Bindemittel und die Polymerzusammensetzung wie in einem der Ansprüche 1 bis 8 dargestellt, enthält.

12. Zusammensetzung nach Anspruch 11, welche ein Fliesenkleber auf Zementbasis ist.

13. Verwendung der Polymerzusammensetzung wie in einem der Ansprüche 1 bis 8 dargestellt in Fliesenklebern, Bauklebstoffen, Fugenmörteln, Putzen, Spachtelmassen, Bodenausgleichsmassen oder Anstrichstoffen.

14. Verwendung der Polymerzusammensetzung wie in einem der Ansprüche 1 bis 8 dargestellt als Bindemittel in Beschichtungszusammensetzungen oder Klebstoffen in Abwesenheit irgendeines anorganischen hydraulischen Bindemittels.

15. Verwendung der Polymerzusammensetzung wie in einem der Ansprüche 1 bis 8 dargestellt zur Beschichtung oder zum Binden von Holz, Papier oder Textilien.

## Revendications

1. Poudre de polymère redispersable, comprenant une composition de polymères qui comprend :
a) un copolymère comprenant, à l'état polymérisé, au moins un ester vinylique (i) d'un acide monocarboxylique comportant de 2 à 4 atomes de carbone et au moins un ester vinylique (ii) d'un acide monocarboxylique comportant au moins 5 atomes de carbone ;
b) et un copolymère différent du copolymère (a) et comprenant, à l'état polymérisé, de l'acétate de vinyle et de l'éthylène.

2. Poudre de polymère redispersable, conforme à la revendication 1, dans laquelle le copolymère (a) comprend, à l'état polymérisé, de 20 à 95 % en poids d'un ou de plusieurs ester(s) vinylique(s) (i) d'acide monocarboxylique comportant de 2 à 4 atomes de carbone, de 5 à 80 % en poids d'un ou de plusieurs ester(s) vinylique(s) (ii) d'acide monocarboxylique comportant au moins 5 atomes de carbone, et (iii) de 0 à 30 % en poids d'un ou de plusieurs comonomère(s) optionnel(s).

3. Poudre de polymère redispersable, conforme à l'une des revendications précédentes, dans laquelle le copolymère (b) comprend, à l'état polymérisé, de 70 à 95 % en poids d'acétate de vinyle, de 5 à 30 % en poids d'éthylène, et de 0 à 25 % en poids d'un ou de plusieurs comonomère(s) optionnel(s).

4. Poudre de polymère redispersable, conforme à l'une des revendications précédentes, dans laquelle le rapport pondéral du copolymère (a) au copolymère (b) vaut de 10/90 à 90/10.

5. Poudre de polymère redispersable, conforme à l'une des revendications précédentes, pour laquelle l'ester vinylique (i) d'acide monocarboxylique comportant de 2 à 4 atomes de carbone est de l'acétate de vinyle.

6. Poudre de polymère redispersable, conforme à l'une des revendications précédentes, pour laquelle l'ester vinylique (ii) d'acide monocarboxylique comportant au moins 5 atomes de carbone est un ester vinylique d'un acide monocarboxylique comportant de 5 à 15 atomes de carbone.

7. Poudre de polymère redispersable, conforme à l'une des revendications précédentes, pour laquelle l'ester vinylique (ii) d'acide monocarboxylique comportant au moins 5 atomes de carbone est un ester vinylique d'un acide monocarboxylique à chaîne ramifiée.

8. Poudre de polymère redispersable, conforme à la revendication 7, pour laquelle l'ester vinylique (ii) d'acide monocarboxylique comportant au moins 5 atomes de carbone est un ester vinylique d'un acide monocarboxylique comportant un groupe carboxyle tertiaire.

9. Poudre de polymère redispersable, conforme à l'une des revendications précédentes, qui comporte en outre un colloïde protecteur et/ou un agent anti-agglomération.

10. Dispersion aqueuse comprenant une composition de polymères du type indiqué dans l'une des revendications 1 à 8.

11. Composition comprenant un liant hydraulique inorganique et une composition de polymères du type indiqué dans l'une des revendications 1 à 8.

12. Composition conforme à la revendication 11, qui est une colle à carrelage à base de ciment.

13. Utilisation d'une composition de polymères, du type indiqué dans l'une des revendications 1 à 8, dans des colles à carrelage, des colles mastics pour bâtiment, des mortiers pour maçonnerie, des enduits, des compositions pour application à la spatule, des compositions de remplissage de sol, ou des peintures.

14. Utilisation d'une composition de polymères, du type indiqué dans l'une des revendications 1 à 8, en tant que liant dans des compositions de revêtement ou des adhésifs, en l'absence de tout liant hydraulique inorganique.

15. Utilisation d'une composition de polymères, du type indiqué dans l'une des revendications 1 à 8, pour revêtir ou attacher du bois, du papier ou des textiles.
